# EUROPEAN PATENT APPLICATION

(11) **EP 4 089 692 A1**
(43) Date of publication of application: **16.11.2022**
(21) Application number: 21173412.4
(22) Date of filing: 11.05.2021
(51) Int. Cl.: H01B 7/18, H01B 7/28, H02G 7/16

(54) **CABLE**

(71) Applicant: Lapp Engineering AG, 6330 Cham (CH)
(72) Inventor: Donne, Corentin, 83310 Grimaud (FR)
(74) Representative: Rutz, Peter

(57) **Abstract**

A cable (10) comprising:
- at least one conductor (1A, 1B, 1C,...);
- at least one conductor insulation layer (2A, 2B, 2C,...) formed around and enclosing said at least one conductor (1A, 1B, 1C,...);
- an outer sheath (4) enclosing said conductor insulation layer (2A, 2B, 2C,...) and said at least one conductor (1A, 1B, 1C,...).

According to the invention, the cable (10) further comprises an inflatable sheath (3) that encloses said outer sheath (4).

## Description

The present invention relates to a cable with frost protection.

A variety of cables for different types of applications is known from the state of the art.

Cables are subjected to various external influences during their service life. Mechanical, thermal and chemical influences can reduce the initially expected lifetime of a cable and lead to premature failure or severe reduction in transmission quality.

Cables are often installed and used outdoors, where they are subjected to the influence of weather and wind. In regions, where snow, ice and frost can be part of normally encountered weather, such as e.g. in ski resorts, cables are routinely installed as free-hanging connections between masts or poles. Ice and frost layers can form around the cables, adding weight to the free-hanging cables. If the ice and frost layers become too thick, the added weight can lead to rupture of the cable. Ice and frost layers need to be removed manually to avoid this risk, which is very time-consuming.

The problem of the present invention is to provide an improved cable that reduces the risk for failure due to formation of ice or frost around the cable.

The inventive solution shall require minimal human intervention for protecting the cable from ice and frost.

The inventive solution shall further be applicable for any cable structure that has been defined according to given requirements and specifications.

Manufacturing processes and layer material used for conventional cables shall be applicable for manufacturing the cable. Further, the inventive solution shall be applicable to cables used in various conditions particularly outdoors, in particular to cables used in very cold environments.

The problem is solved by a cable according to claim 1, a method for protecting a cable according to claim 10 and a cable protection system according to claim 13. Further preferred embodiments of the cable are defined in dependent claims.

The cable comprises
- at least one conductor;
- at least one conductor insulation layer formed around and enclosing the at least one conductor;
- an outer sheath enclosing the conductor insulation layer and the at least one conductor.

According to the invention, the cable further comprises an inflatable sheath that encloses the outer sheath. The inflatable sheath can be inflated by pumping air or gas into the space formed between the outer sheath and the inflatable sheath. The inflation leads to an increase in volume of the inflatable sheath, while the other components of the cable remain at the same volume as in the non-inflated state of the cable. Layers of ice and frost that have formed around the cable are broken into small pieces by the increase in volume of the inflatable sheath. The small pieces of ice and frost fall off the cable due to gravitation and wind. The ice or frost layer is hence removed from the cable. The compressed air or gas can be released from the inflatable sheath, bringing it back to the non-inflated state.

In a preferred embodiment, the inflatable sheath is inflated by introducing air or gas at pressures above 1bar between the inflatable sheath and the outer sheath. The inflatable sheath can preferably be inflated to at least 120%, preferably at least 150%, most preferred to at least 200% of its non-inflated volume, the non-inflated volume being defined as 100%. The change in volume is hence large enough to break any rigid layer of ice or frost around the cable.

In a particularly preferred embodiment of the present invention, the non-inflated inflatable sheath tightly encloses the outer sheath. The overall volume of the cable is hence almost not increased by the inflatable sheath. This is advantageous if the cable is installed outdoors, in particular if the cable is free-hanging between power poles, since the volume of the cable directly correlates with the force that wind has on the cable.

In preferred embodiments, the inflatable sheath is made from an elastic polymeric material, preferably a thermoplastic polyurethane material, most preferred a polyether-based thermoplastic polyurethane material. In a further preferred embodiment, the inflatable sheath is made from silicone.

In further preferred embodiments, the cable further comprises at least one structural support rope, which increases the mechanical stability of the cable. The structural support rope preferably comprises a braid of stainless-steel fibres. The structural support rope is preferably surrounded by the outer sheath. In a further preferred embodiment, the structural support rope is at least partially enclosed in the inflatable sheath.

The cable preferably further comprises at least one filler which extends along the cable axis to optimize the roundness of the cable.

In a further embodiment according to the invention, the cable further comprises a control wire to transmit steering or surveillance signals.

Preferably, the inflatable sheath is glued or welded at one or several connection points to the outer sheath. The inflatable sheath is hence secured to the inner parts of the cable but can still be inflated without problems.

In another embodiment according to the invention, a first end of the cable is sealed in an airtight manner by gluing or fusing together the inflatable sheath and the outer sheath. The second end of the cable comprises a valve, through which air or gas can be directed into the space between the outer sheath and the inflatable sheath.

Preferably, the cable comprises several conductors which are each surrounded by a conductor insulation layer and which are all enclosed within the outer sheath.

The conductors are preferably made of stranded or bunched copper conductors.

The cable preferably comprises one or several inflation sensors, such as pressure sensors, strain sensors or extension sensors, to prevent over-inflation of the inflatable sheath.

An inventive cable can be protected from frost-related failure by an equally inventive method.

The method comprises the steps of:
(a) detecting a frost layer around a cable; and
(b) inflating the inflatable sheath of the cable by injecting compressed air into the space between the inflatable sheath and the outer sheath; and
(c) releasing the compressed air from the space between the inflatable sheath and the outer sheath; and (d) repeating steps (b) and (c) repetitively until near-complete removal of the frost layer is detected.

The method hence allows for a protection of a cable from collapsing due to thick layers of ice or frost around it. The cable can therefore be used with a guaranteed functionality, since unexpected failure is strongly reduced.

In a preferred embodiment, the method is performed automatically, preferably by a computer-assisted device. This allows for a constant protection of a cable at minimum cost and personal effort.

In a particularly preferred embodiment of the method, a technical alarm is automatically triggered if an error is detected during the execution of the method.

The inventive method is preferably performed using an equally inventive cable protection system. The cable protection system preferably comprises an inventive cable and an air compressor suited to inflate the inflatable sheath of the cable through a connecting tube. Preferably, the cable protection system further comprises a sensor unit, which is preferably located on or near the cable and which comprises at least one temperature and/or humidity sensor. Preferably, the sensor unit further comprises a wireless communication unit to transmit data.

The present invention will be further described by way of example, with reference to the accompanying drawings, wherein:
- Fig. 1: shows a cross-sectional view of a first embodiment of an inventive cable 10;
- Fig. 2a: shows a cross-sectional view of the inventive cable 10 from Fig. 1 with an ice layer 11;
- Fig. 2b: shows a cross-sectional view of the inventive cable 10 from Fig. 1 with an inflated inflatable layer 3 and an ice layer 11 broken into small pieces;
- Fig. 3a: shows a cross-sectional view of a second embodiment of an inventive cable 10;
- Fig. 3b: shows a cross-sectional view of a third embodiment of an inventive cable 10;
- Fig. 3c: shows a cross-sectional view of a fourth embodiment of an inventive cable 10;
- Fig. 4: shows a cross-sectional view of a fifth embodiment of an inventive cable 10;
- Fig. 5: shows a perspective view of the inventive cable 10 from Fig. 1; and
- Fig. 6: shows an inventive cable protection system 100 for an inventive cable 10 suspended between two power poles 80, 80' ;

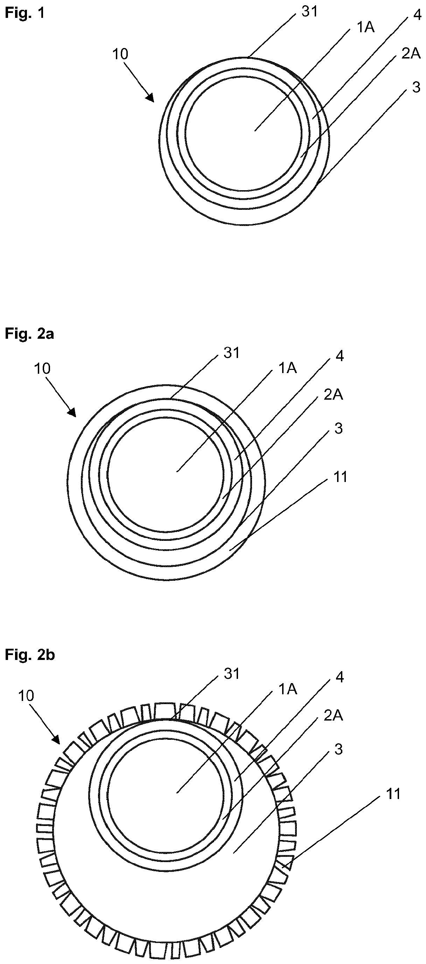

Fig. 1 schematically shows a cross-sectional view of a first embodiment of an inventive cable 10. The cable comprises a conductor 1A which is electrically insulated by a surrounding conductor insulation layer 2A. The conductor 1A and the conductor insulation layer 2A are enclosed by an outer sheath 4. An inflatable sheath 3 encloses the outer sheath 4. The inflatable sheath 3 is attached to the outer sheath at a connection point 31.

Fig. 2a schematically shows a cross-sectional view of the inventive cable 10 from Fig. 1 with an ice layer 11 formed around the cable.

Fig. 2b shows a cross-sectional view of the inventive cable 10 from Fig. 1 with an inflated inflatable layer 3 and an ice layer 11 broken into small pieces.

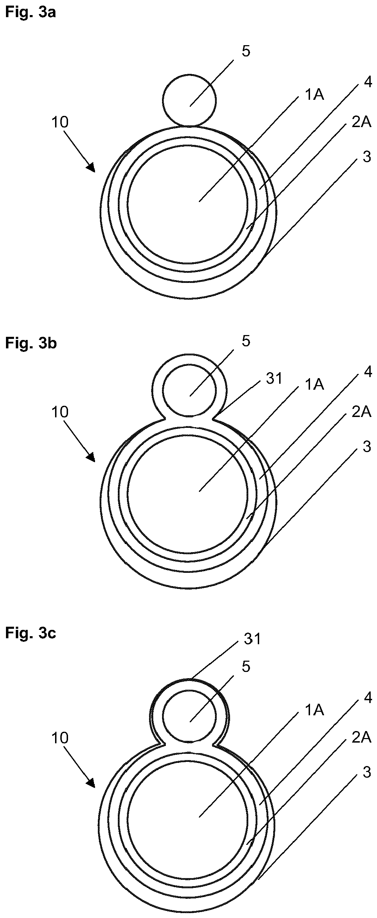

Fig. 3a schematically depicts a cross-sectional view of a second embodiment of an inventive cable 10. The cable 10 comprises all components known from the embodiment in Fig. 1. The cable 10 further comprises a structural support rope 5 that is located outside the inflatable sheath 3.

Fig. 3b schematically shows a cross-sectional view of a third embodiment of an inventive cable 10. The cable 10 comprises a structural support rope 5 that is enclosed in the outer sheath 4. The inflatable layer is glued or welded to the outer sheath 4 at the connection point 31.

Fig. 3c schematically shows a cross-sectional view of a fourth embodiment of an inventive cable 10. The cable 10 comprises a structural support rope 5 that is enclosed in both the outer sheath 4 and the inflatable sheath 3. The inflatable sheath 3 is glued or welded to the outer sheath 4 at the connection point 31.

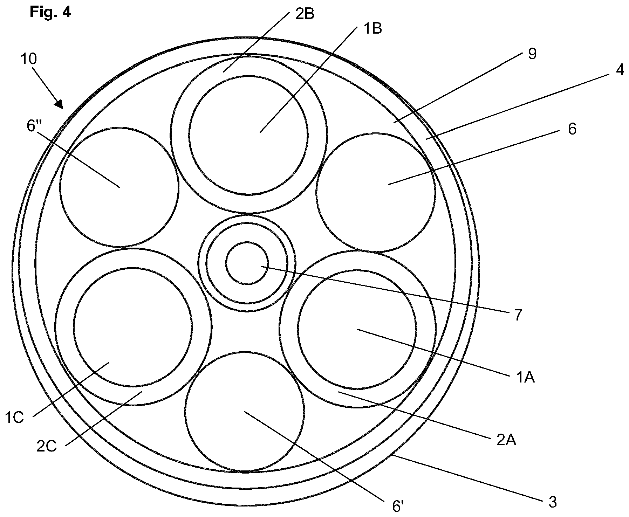

Fig. 4 shows a cross-sectional view of a fifth embodiment of an inventive cable 10. The cable comprises three conductors 1A, 1B, 1C, each electrically insulated by a conductor insulation layer 2A, 2B, 2C. The cable further comprises an optical fibre 7 and fillers 6, 6', 6". All aforementioned components are integrated in an inner sheath 9 which is enclosed in an outer sheath 4. The outer sheath 4 is enclosed in an inflatable sheath 3.

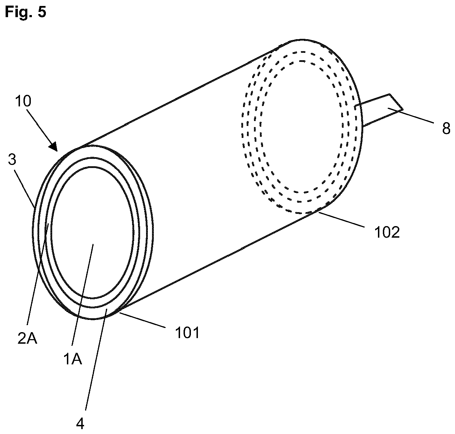

Fig. 5 shows a perspective view of the inventive cable 10 from Fig. 1. The cable is delimited by a first end of cable 101 and a second end of cable 102. At the first end of cable 101, the inflatable sheath 3 and the outer sheath 4 are glued or welded together in an airtight way. At the second end of cable 102, a valve 8 allows to pump air or gas into the space to be inflated between the outer sheath 4 and the inflatable sheath 3.

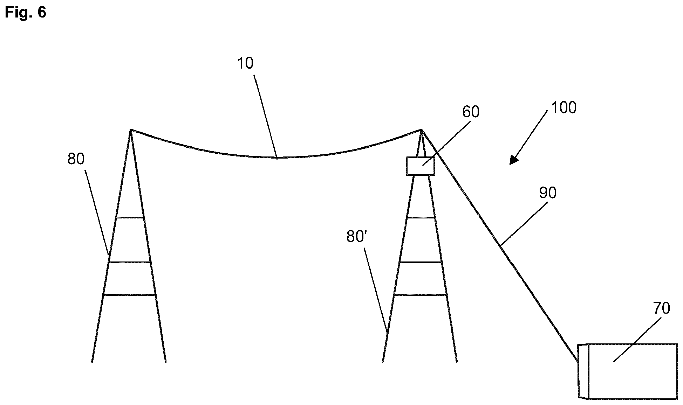

Fig. 6 shows an inventive cable protection system 100 for an inventive cable 10 suspended between two power poles 80, 80'. The cable 10 is free-hanging between the poles 80, 80' and has to support its own weight. The cable protection system 100 comprises an air compressor 60 that is connected through a connecting tube 90 to the cable 10. A sensor unit 60 can measure status information of the cable 10 or the surroundings and transmit the information to the air compressor 70.

The embodiments presented in the figures and description are only non-limiting illustrative examples of embodiments according to the invention. Further embodiments according to the invention can be realized by combining technical features from any of the embodiments shown as well as with technical features that are commonly used in cable design.

List of reference signs
- 1A, 1B, 1C,...: conductor
- 2A, 2B, 2C,...: conductor insulation layer
- 3: inflatable sheath
- 31: connection point
- 4: outer sheath
- 5: Structural support rope
- 6, 6', 6": filler
- 7: optical fibre
- 8: valve
- 9: inner sheath
- 10: cable
- 101: first end of cable
- 102: second end of cable
- 11: ice/frost layer
- 60: sensor unit
- 70: air compressor
- 80, 80': power poles
- 90: connecting tube
- 100: cable protection system

## Claims

1. A cable (10) comprising:
- at least one conductor (1A, 1B, 1C,...);
- at least one conductor insulation layer (2A, 2B, 2C,...) formed around and enclosing said at least one conductor (1A, 1B, 1C,...) ;
- an outer sheath (4) enclosing said conductor insulation layer (2A, 2B, 2C,...) and said at least one conductor (1A, 1B, 1C,...);
**characterized in that;**
the cable (10) further comprises an inflatable sheath (3) that encloses said outer sheath (4).

2. A cable (10) according to claim 1, wherein the inflatable sheath (3) is inflated by introducing air or gas at pressures above 1bar between the inflatable sheath (3) and the outer sheath (4) and/or the inflatable sheath (3) can be inflated to at least 120%, preferably at least 150%, most preferred to at least 200% of its non-inflated volume.

3. A cable (10) according to claim 1 or 2, wherein the non-inflated inflatable sheath (3) tightly encloses the outer sheath (4).

4. A cable (10) according to claim 1, 2 or 3, wherein the inflatable sheath (3) is made from an elastic polymeric material, preferably a thermoplastic polyurethane material, more preferred a polyether-based thermoplastic polyurethane material.

5. A cable (10) according to one of the claims 1 - 4, wherein the cable (10) further comprises at least one structural support rope (5) and/or that the structural support rope (5) is surrounded by the outer sheath (4) and/or that the structural support rope (5) is at least partially enclosed in the inflatable sheath (3).

6. A cable (10) according to one of the claims 1 - 5, wherein the inflatable sheath (3) is glued or welded at one or several connection points (31) to the outer sheath (4).

7. A cable (10) according to one of the claims 1 - 6, wherein a first end of the cable (101) is sealed in an airtight manner by gluing or fusing together the inflatable sheath (3) and the outer sheath (4) and a second end of the cable (102) comprises a valve (8), through which air or gas can be inflated into the space between the outer sheath (4) and the inflatable sheath (3).

8. A cable (10) according to one of the claims 1 - 7, wherein the cable (10) comprises several conductors (1A, 1B, 1C,...) which are each surrounded by a conductor insulation layer (2A, 2B, 2C,...) and which are all enclosed within the outer sheath (4).

9. A cable (10) according to one of the claims 1 - 8, wherein the cable (10) comprises one or several inflation sensors, such as pressure sensors, strain sensors or extension sensors.

10. A method for protecting a cable (10) according to one of the claims 1 - 9 from frost-related failure, wherein
(a) a frost layer (11) around a cable (10) is detected;
(b) the inflatable sheath (3) of the cable (10) is inflated by injecting compressed air into the space between the inflatable sheath (3) and the outer sheath (4);
(c) the compressed air is released from the space between the inflatable sheath (3) and the outer sheath (4);
(d) steps (b) and (c) are repeated repetitively until near-complete removal of the frost layer (11) is detected.

11. A method according to claim 11 wherein the method is performed automatically, preferably by a computer-assisted device.

12. A method according to claim 11 or 12 wherein a technical alarm is automatically triggered if an error is detected during the execution of the method.

13. A cable protection system (100) comprising a cable (10) according to one of the claims 1 to 9.

14. A cable protection system (100) according to claim 13 comprising an air compressor (70) that is suited to inflate the inflatable sheath of the cable (10) through a connecting tube (90).

15. A cable protection system (100) to claim 13 or 14 further comprising a sensor unit (60), which is preferably located on or near the cable (10), and which comprises at least one temperature and/or humidity sensor and/or a wireless communication unit.
